# NEUE EUROPÄISCHE PATENTSCHRIFT

(11) **EP 1 343 669 B2**
(45) Veröffentlichungstag und Bekanntmachung des Hinweises auf die Entscheidung über den Einspruch: **11.02.2015**
(45) Hinweis auf die Patenterteilung: 04.03.2009
(21) Anmeldenummer: 01986421.4
(22) Anmeldetag: 18.12.2001
(51) Int. Cl.: B60T 7/12

(54) **VERFAHREN UND VORRICHTUNG ZUM STEUERN EINER BREMSAUSRÜSTUNG EINES KRAFTFAHRZEUGES**
METHOD AND DEVICE FOR CONTROLLING THE BRAKING EQUIPMENT OF A MOTOR VEHICLE
PROCEDE ET DISPOSITIF POUR PILOTER UNE INSTALLATION DE FREINAGE D'AUTOMOBILE

(30) Priorität: 18.12.2000 DE 10063062
(43) Veröffentlichungstag der Anmeldung: 17.09.2003
(73) Patentinhaber: Lucas Automotive GmbH, 56070 Koblenz (DE)
(72) Erfinder: KINDER, Ralf, 56337 Eitelborn (DE); KLAPPER, Gerhard, 56154 Boppard (DE); SHOKOUFANDEH, Reza, Green Lane Coventry CV3 6NY (GB); ENDRES, Franz-Josef, 56244 Sessenhausen (DE); LEITER, Ralf, 56179 Vallendar (DE); MAACK, Lorenz, 71032 Böblingen (DE); SÖNS, Andreas, 71120 Grafenau (DE)
(74) Vertreter: Schmidt, Steffen J.
(86) Internationale Anmeldenummer: PCT/EP2001/014944
(87) Internationale Veröffentlichungsnummer: WO 2002/049894

(56) Entgegenhaltungen:
- EP-A- 1 048 538
- EP-A1- 0 825 081
- EP-A1- 1 048 538
- WO-A1-00/12365
- DE-A- 19 648 055
- DE-A- 19 825 642
- DE-A1- 2 420 252
- DE-A1- 3 303 467
- DE-A1- 3 618 532
- DE-A1- 3 813 083
- DE-A1- 4 143 666
- DE-A1- 19 611 360
- DE-A1- 19 629 532
- DE-A1- 19 648 055
- DE-A1- 19 742 815
- DE-A1- 19 825 642
- DE-A1- 19 856 137
- DE-A1- 19 900 314
- DE-A1- 19 909 326
- DE-A1- 19 925 249
- US-A- 5 289 739
- US-A- 5 984 429
- US-A- 5 984 429
- E. SIEGERT ET AL.: 'Fahrsicherheitssysteme', Bd. 2, 1998, VIEWEG & SOHN VERLAGSGESELSCHAFT MBH, BERLIN - HEIDELBERG Seiten 72-81 - 218-219

## Beschreibung

### Gebiet der Erfindung

Die vorliegende Erfindung betrifft ein Verfahren und eine Vorrichtung, um eine Bremsausrüstung eines Kraftfahrzeuges zu steuern. Insbesondere betrifft die vorliegende Erfindung ein Verfahren und eine Vorrichtung zum Steuern einer Bremsausrüstung während eines sogenannten "Stop-and-Go"-Betriebes eines Kraftfahrzeuges, bei dem sich aufeinanderfolgende Betriebszustände mit Abbrems-, Stand- und Anfahrphasen abwechseln.

### Hintergrund der Erfindung

Nach dem Kraftfahrtechnischen Taschenbuch, Robert Bosch GmbH, 20. Auflage, Seite 502 ff., werden mit dem Begriff "Bremsausrüstung" die Gesamtheit aller Bremsanlagen eines Kraftfahrzeuges verstanden, um dessen Geschwindigkeit zu verringern, es zum Stillstand zu bringen sowie im Stillstand zu halten. Im allgemeinen umfasst eine Bremsausrüstung eine Betriebs-, eine Feststell- und eine Hilfsbremseinrichtung.

Die Betriebsbremseinrichtung ermöglicht es, die Geschwindigkeit des Kraftfahrzeuges während seines normalen Fahrbetriebes zu verringern oder das Kraftfahrzeug zum Stillstand zu bringen. Üblicherweise wird die Betriebsbremseinrichtung durch einen Fahrzeugführer per Hand und/oder Fuß mittels einer geeigneten Betätigungseinrichtung (z.B. Bremspedal) und/oder von einer Fahrzeugsteuerung zur Steuerung des Fahrbetriebes ("cruise control", "tempomat") gesteuert.

Die "Feststellbremseinrichtung" ist üblicherweise separat von der Betriebsbremseinrichtung ausgeführt und ermöglicht es, Bremskräfte für das Kraftfahrzeug vorzugeben und aufrechtzuerhalten. Normalerweise wird die Feststellbremseinrichtung verwendet, um das Kraftfahrzeug, auch in Abwesenheit des Fahrzeugführers, im Stillstand sicher zu halten. Üblicherweise wird die Feststellbremseinrichtung durch den Fahrzeugführer per Hand und/oder Fuß betätigt, um eine gewünschte Bremskraft vorzugeben. Im allgemeinen sind Betätigungseinrichtungen für Feststellbremseinrichtungen so ausgelegt, dass eine vorgegebene Bremskraft so lange aufrechterhalten wird, bis der Fahrzeugführer entsprechende Maßnahmen ergreift, wie z.B. eine erneute Betätigung der jeweiligen Betätigungseinrichtung durchführt ("Lösen einer Handbremse").

Die "Hilfsbremseinrichtung" dient im allgemeinen dazu, bei einer Störung der Betriebsbremseinrichtung deren Funktion teilweise oder vollständig bereitzustellen. Für die Hilfsbremseinrichtung werden in der Regel Einrichtungen der Betriebs- und/oder Feststellbremseinrichtungen mitbenutzt. So kann beispielsweise ein Bremskreis einer Betriebsbremseinrichtung mit mehreren Bremskreisen oder die Feststellbremseinrichtung die Funktion der Hilfsbremseinrichtung übernehmen.

### Stand der Technik

Um den Betrieb eines Kraftfahrzeuges für Betriebszustände komfortabler zu gestalten, in denen die Bremsausrüstung (teilweise) verwendet wird, und die beim Betrieb einer Bremsausrüstung resultierende Sicherheit in Fahr- und Stillstandsphasen eines Fahrzeugs zu erhöhen, sind verschiedene Lösungen bekannt.

So werden in Fahrzeugen sogenannte "Bremsassistenten" eingesetzt, die einen Fahrzeugführer bei einer Betätigung einer Betriebsbremseinrichtung unterstützen. Insbesondere bei Betriebszuständen eines Fahrzeuges, in denen hohe Bremskräfte in kurzen Zeiträumen erforderlich sind, steuert der Bremsassistent die Betriebsbremseinrichtung in Abhängigkeit eines aktuellen Betriebszustandes des Fahrzeuges so an, dass die bereitgestellte Bremskraft im Vergleich zu einer Bremskraft erhöht wird, die ohne Verwendung des Bremsassistenten durch den Fahrzeugführer alleine erzeugt würde.

Aus der DE-OS-24 20 252 ist es bekannt, die Feststellbremse eines Kraftfahrzeuges in Abhängigkeit einer Stellung eines Gaspedales zu aktivieren und zu deaktivieren. Dabei wird die Feststellbremse zum Erzeugen einer fest vorgegebenen Bremskraft aktiviert, wenn das Gaspedal unbetätigt ist. Dementsprechend wird die Feststellbremse deaktiviert, wodurch die fest vorgegebene Bremskraft abgebaut wird, sobald das Gaspedal betätigt wird.

Gemäß der DE 199 09 326 A1 wird zur Steuerung eines Bremskrafterzeugers eines Kraftfahrzeuges ein Fahrpedal verwendet, das eine Ruhestellung und eine Neutralstellung aufweist. Das Fahrpedal ist aus seiner Ruhestellung in seine Neutralstellung bewegbar, aus der heraus eine weitere Bewegung zu einer Erhöhung des Antriebsmomentes bzw. der Motorleistung des Kraftfahrzeugmotors führt. Stellungen des Fahrpedales zwischen der Ruhestellung und der Neutralstellung werden nicht zur Steuerung des Kraftfahrzeugmotors verwendet. Um das Kraftfahrzeug während eines Fahrbetriebes ohne Betätigung eines Bremspedales abzubremsen, baut der Bremskrafterzeuger eine vorab festgelegte Bremskraft gesteuert auf, wenn das Fahrpedal seine Ruhestellung erreicht. Entsprechend baut der Bremskrafterzeuger die festgelegte Bremskraft gesteuert ab, wenn das Fahrpedal seine Ruhestellung verläßt, um das Kraftfahrzeug erneut zu beschleunigen. Alternativ ist es vorgesehen, zum Abbremsen des Kraftfahrzeuges eine Bewegung des Fahrpedals aus der Neutralstellung in die Ruhestellung zu ermitteln und mittels des Bremskrafterzeugers die vorab festgelegte Bremskraft entsprechend der ermittelten Fahrpedalbewegung aufzubauen. In diesem Fall wird bei einem erneuten Beschleunigen des Kraftfahrzeuges, eine Bewegung des Fahrpedals aus der Ruhestellung in die Neutralstellung ermittelt und der Bremskrafterzeuger zum Abbau der vorab festgelegten Bremskraft entsprechend der Fahrpedalbewegung gesteuert.

Aus der DE 36 18 532 A1 ist eine Anfahrhilfe für ein Kraftfahrzeug an einer Steigung und ein Verfahren zum Steuern der Anfahrhilfe bekannt. Hierbei weist eine Bremsanlage ein zwischen dem Hauptbremszylinder und den Radbremszylindern angeordnetes Ventil auf, welches zur Aufrechterhaltung oder Aufhebung des Bremsbetätigungsdruckes geschlossen oder geöffnet wird. Beim Anhalten des Kraftfahrzeuges und insbesondere beim Anhalten an einer Steigung wird der mittels des Bremspedals durch den Fahrzeugführer erzeugte Bremsbetätigungsdruck aufrechterhalten. Hierfür wird das Ventil der Bremsanlage geschlossen, wenn anhand von Parametern, die den aktuellen Betriebszustand des Kraftfahrzeuges charakterisieren, festgestellt wird, dass das Kraftfahrzeug steht. Zur Ermittlung des Stillstandes des Kraftfahrzeuges wird überprüft, ob die aktuelle Fahrgeschwindigkeit Null beträgt, ob die Kupplung gelöst ist, ob der erste Gang oder der Rückwärtsgang eingelegt ist und ob der Neigungswinkel des Kraftfahrzeuges einem vorbestimmten Neigungswinkel entspricht oder größer als dieser ist. Sind diese Bedingungen erfüllt, wird das Ventil geschlossen und der Fahrzeugführer kann das Bremspedal lösen, ohne dass sich dabei das Kraftfahrzeug bewegt, da mittels des Ventils die für den Stillstand erforderliche Bremskraft aufrechterhalten wird. Durch eine erneute Betätigung des Bremspedals durch den Fahrzeugführer kann der Bremsbetätigungsdruck erhöht werden, wobei auch hier das Ventil zur Aufrechterhaltung des neu eingestellten Bremsbetätigungsdrucks dient.
Wenn das Kraftfahrzeug aus dem Stillstand in einen Fahrzustand gebracht wird, wird das durch den Fahrzeugmotor erzeugte momentane Drehmoment erfasst und mit einem zum Anfahren des haltenden Kraftfahrzeuges notwendigen Motordrehmoment verglichen. Hierbei kann das zum Anfahren erforderliche Motordrehmoment ein vorgegebenes Solldrehmoment des Motors sein, das unter Berücksichtigung des Neigungswinkels und in Abhängigkeit vom Gewicht des Kraftfahrzeuges korrigiert ist. Entspricht das momentane Motordrehmoment dem zum Anfahren erforderlichen Motordrehmoment oder ist größer als dieses, wird das Ventil geöffnet, wodurch sich der zuvor aufrechterhaltene Bremsbetätigungsdruck abbaut.

Zur Ermittlung des Motordrehmoments kann ein herkömmlicher Drehmomentsensor am Motor, ein Drehmomentsensor entlang des Antriebsstranges vom Motor zu den Rädern, ein der Kupplung zugeordneter Sensor oder eine Anordnung verwendet werden, die zwei an einem drehbaren Teil angeordnete Schalter aufweist. Die zwei Schalter, die beispielsweise an Bremsbacken der Radbremsen angeordnet sein können, erfassen eine Verdrehung des drehbaren Teils sowie deren Richtung, um daraus das aktuelle Motordrehmoment zu ermitteln.

Wird in dem oben beschriebenen Stillstandszustand des Kraftfahrzeuges ermittelt, dass die Feststellbremse des Fahrzeuges durch den Fahrzeugführer betätigt wurde, also angezogen ist, wird das Ventil der Bremsanlage nicht geschlossen. Wenn in diesem Zustand des Kraftfahrzeuges der Fahrzeugführer das Bremspedal nicht mehr betätigt, wird daher der Bremsbetätigungsdruck durch das Ventil nicht aufrechterhalten, sondern baut sich ab.

Die oben beschriebenen Vorrichtungen weisen Nachteile auf, weshalb sie insbesondere für eine Verwendung bei einem "Stop- and-Go"-Betrieb nicht geeignet sind oder keine Unterstützung für einen Fahrzeugführer darstellen.

So dienen Bremsassistenten zur Unterstützung eines Fahrzeugführers beim Erzeugen einer Bremskraft, insbesondere bei Notbremsungen. Wie oben beschrieben, werden Bremsassistenten aktiviert, wenn ein Betriebszustand der Fahrzeugbremsanlage für eine Notbremsung erkannt wird. Solche Betriebszustände treten bei einem "Stop-and-Go"-Betrieb normalerweise nicht auf, weshalb Bremsassistenten hierbei nicht aktiviert werden. Gemäß DE-OS-24 20 252 wird die Bremskraft der Feststellbremse schlagartig bereitgestellt, wenn sich das Gaspedal in einer unbelasteten Stellung befindet. Entsprechend wird bei einer Belastung des Gaspedals die Feststellbremse schlagartig gelöst, d.h. die Bremskraft wird schlagartig entfernt. Hierbei wird von der Feststellbremse in ihrem betätigten Zustand eine fest vorgegebene Bremskraft bereitgestellt, die nicht auf den aktuellen Betriebszustand des Kraftfahrzeuges abgestimmt ist. So kann beispielsweise die fest vorgegebene Bremskraft nicht ausreichen, das Kraftfahrzeug im Stillstand zu halten, wenn es sich an einer Steigung befindet. Des weiteren wird die Feststellbremse immer aktiviert, wenn sich das Gaspedal in einer unbelasteten Stellung befindet. Demzufolge wird die Feststellbremse auch beim Fahrbetrieb des Kraftfahrzeuges aktiviert, wodurch es insbesondere bei hohen Geschwindigkeiten zu unerwünschten oder unkontrollierbaren Fahrzuständen kommen kann. Außerdem führt diese Art der Betätigung der Feststellbremse zu einem höheren Verschleiß, da die Feststellbremse nicht, wie vorgesehen, nur im Stillstand des Kraftfahrzeuges Bremskräfte bereitstellt.

Gemäß der DE 199 09 326 A1 stellt die Bremsanlage in Abhängigkeit von Stellungen oder Bewegungen des Gaspedals Bremskraft bereit. Dadurch soll die Fahrgeschwindigkeit des Kraftfahrzeuges ohne zusätzliche Betätigung des Bremspedals in Fahrzuständen gesteuert werden. Daher ist es dort nicht möglich, das Kraftfahrzeug bei unbetätigtem Gaspedal rollen zu lassen, was insbesondere bei einem "Stop-and-Go"-Betrieb erwünscht ist, da dort in diesem Fall automatisch immer Bremskräfte erzeugt werden. Des weiteren deaktiviert eine Betätigung des Bremspedals die Steuerung der Bremsanlage durch das Gaspedal. Folglich verhält sich die dort beschriebene Bremsanlage wie eine herkömmliche Bremsanlage, wenn das Fahrzeug durch Betätigung des Bremspedals zum Stillstand gebracht wird.

Die gattungsgemäße US 5,984,429 zeigt eine Einrichtung zur automatischen Betätigung einer hydraulischen Bremsanlage eines Straßenfährzeuges zum Zweck der Aufrechterhaltung eines Fahrzeugstillstandes für die Dauer verkehrsbedingter Stillstandsphasen durch Einkopplung von Bremsdruck aus einer ohne Mitwirkung des Fahrers aktivierbaren Bremsdruckquelle in mindestens eine Radbremse des Fahrzeuges. Eine Bremsdruck-Steuerungseinrichtung vermittelt aus einer nach Plausibilitätskriterien erfolgenden Verarbeitung von Sensor-Ausgangssignalen einer Sensor-Anordnung bei laufendern Motor und nach einer Bremsung erreichtem Stillstand des Fahrzeuges eine selbsttätige Fortsetzung der Stillstandsbremsung. Nachdem ab Stillstand des Fahrzeuges eine Verzögerungszeitspanne definierter Dauer verstrichen ist, wird ein für einen sicheren Stillstand des Fahrzeuges hinreichender Bremsdruck in die für die Stillstandsbremsung ausgenutzte Radbremse eingekoppelt. Die Wiederaufnahme des Fahrbetriebes, ist aus einer redundanten Kombination von Sensor-Ausgangssignalen erfassbar. Die Bremsdruck-Steuerungseinrichtung aktiviert den automatischen Stillstands-Bremsbetrieb nur dann, wenn der Fahrer innerhalb der Verzögerungszeitspanne eine als Fahrerwunsch zur Aktivierung der automatischen Stillstandsbremsung erkennbare, durch die Sensor-Anordnung erfassbare Betätigungs-Aktivität entfaltet. Die Bremsdruck-Steuerungseinrichtung vermittelt die Beendigung des automatischen Stillstands-Bremsbetriebes nur dann, wenn zusätzlich zu Sensor-Ausgangssignalen der Sensor-Anordnung, die einen Fahrerwunsch nach Wiederaufnahme des Fahrbetriebes erkennen lassen, auch Sensor-Ausgangssignale anstehen, die, anhand von Plausibilitätskriterien, die Erfüllung sicherheitsrelevanter Nebenbedingungen signalisieren.

Die Anfahrhilfe gemäß DE 36 18 532 A1 stellt nur dann selbständig Bremskräfte bereit, wenn sich das Fahrzeug bereits im Stillstand befindet. Solange sich das Fahrzeug noch bewegt, arbeitet die dort beschriebene Bremsanlage in herkömmlicher Weise und unterstützt folglich den Fahrzeugführer bei einem "Stop-and-Go"-Betrieb nicht. Die WO 00/12365 A2 betrifft ein Verfahren und eine Vorrichtung zur Sicherstellung des Stillstandes eines Fahrzeugs.

### Aufgabe der Erfindung

Aufgabe der vorliegenden Erfindung ist es, ein Verfahren und eine Vorrichtung zum Steuern einer Bremsausrüstung eines Kraftfahrzeuges bereitzustellen, die den Fahrzeugführer bei einem "Stop-and-Go"-Betrieb des Kraftfahrzeuges unterstützen und diesen komfortabler gestalten, wobei die oben aufgeführten Nachteile des Standes der Technik überwunden werden.

### Kurzbeschreibung der Erfindung

Zur Lösung dieser Aufgabe stellt die Erfindung ein Verfahren zum Steuern einer Bremsausrüstung eines Kraftfahrzeuges mit den Merkmalen des Anspruchs 1 bereit, sowie eine Vorrichtung mit den Merkmalen des Anspruchs 11 und ein Computerprogrammprodukt gemäß Anspruch 17 bereit.

Hierbei ist es möglich, die Bremsausrüstung so zu steuern, dass der Übergang in den Stillstandszustand unterstützt wird, indem Bremskräfte aufgebaut werden, die geeignet sind, das Kraftfahrzeug in den Stillstandszustand zu bringen. In diesem Fall kann die Betätigung der Bremsausrüstung durch den Fahrzeugführer unterstützt oder ersetzt werden, oder die Bremsausrüstung erzeugt die hier gewünschten Bremskräfte ohne eine vorherige Betätigung durch den Fahrzeugführer.

Des weiteren stellt die vorliegende Erfindung ein Verfahren zum Steuern einer Bremsausrüstung eines Kraftfahrzeuges bereit, bei dem ein Betriebszustand eines Kraftfahrzeuges detektiert wird, indem das Kraftfahrzeug aus einem Stillstandszustand, bei dem die Fahrgeschwindigkeit des Kraftfahrzeuges Null ist, in einen Fahrzustand gebracht werden soll. Liegt ein derartiger Betriebszustand vor, wird eine Bremsausrüstung des Kraftfahrzeuges so gesteuert, dass die im Stillstandszustand von der Bremsausrüstung erzeugten Bremskräfte in einer Weise abgebaut werden, die einen Übergang in den Fahrzustand zulassen. Auch hier erfolgt die gesteuerte Betätigung, genauer die gesteuerte Deaktivierung der Bremsausrüstung ohne eine den Bremskraftabbau verursachende Betätigung durch den Fahrzeugführer.

Um beim Abbau der Bremskräfte einen möglichst ruckfreien Übergang in den Fahrzustand zu ermöglichen und erhöhte Belastungen oder Beschädigungen der Bremsausrüstung, insbesondere von Bremsbelägen, zu vermeiden, kann beim Abbau der Bremskräfte während eines Anfahrvorganges der jeweilige Betriebszustand des Kraftfahrzeuges gesteuert werden. Insbesondere ist es hierbei vorgesehen, beim Anfahren und bei einem dabei erfolgenden Abbau von Bremskräften die Motordrehzahl und/oder das Motordrehmoment des Kraftfahrzeuges wenigstens kurzfristig zu reduzieren. Insbesondere bei starken Beschleunigungsvorgängen (Kavalierstart) kann auf diese Weise der Abbau von Bremskräften und der Aufbau von an den Rädern wirkenden Antriebskräften aufeinander abgestimmt werden. In Abhängigkeit des Abbaus der Bremskräfte kann die Motordrehzahl und/oder das Motordrehmoment sprungartig, stufenweisen, linear oder gemäß einer anderen Funktion auf die von dem Fahrzeugführer gewünschte bzw. vorgegebene Größe gebracht werden, um den gewünschten Anfahrvorgang zu ermöglichen.

Das zuvor genannte Verfahren wird zum Steuern einer Bremsausrüstung verwendet, um bei einem "Stop-and-Go"-Betrieb eines Kraftfahrzeuges sowohl bei Abbremsvorgängen als auch bei Anfahrvorgängen einen Fahrzeugführer zu unterstützen.

Um den aktuellen Betriebszustand des Kraftfahrzeuges zu erfassen oder zu ermitteln, können Parameter, die den aktuellen Betriebszustand des Fahrzeuges charakterisieren, und/oder Steuersignale verwendet werden, die einen Übergang in den und/oder aus dem Stillstandszustand angeben.

Hierbei ist es vorgesehen, als Betriebszustandsparameter für das Kraftfahrzeug wenigstens einen von den Größen zu verwenden, die die Geschwindigkeit, die Beschleunigung, die Querbeschleunigung, die Gierrate, die Neigung, die Motordrehzahl, das wirksame Antriebsmoment, die Drehzahl eines oder mehrerer Räder, den Getriebezustand (d.h. den eingelegten Gang), Stellungen und/oder Bewegungen eines Gaspedals, Stellungen und/oder Bewegungen eines Bremspedals, Stellungen und/oder Bewegungen eines Kupplungspedals, den Lenkwinkel und den Betriebszustand der Bremsausrüstung definieren.

Bei Größen, die den Zustand der Bremsausrüstung angeben, sollten vorzugsweise entsprechende Größen für einzelne oder mehrere Komponenten der Bremsausrüstung, wie z.B. einer Betriebsbremseinrichtung, einer Feststellbremseinrichtung und einer Hilfsbremseinrichtung, ermittelt werden.

Solche Parameter können mittels entsprechender Sensoren und/oder durch Signale bereitgestellt werden, die von vorhandenen Steuer- und/oder Regeleinrichtungen des Fahrzeugs geliefert werden.

Die Steuersignale, die einen Übergang in den und/oder aus dem Stillstandszustand angeben, umfassen von einer Steuer- und/oder Regeleinrichtung des Fahrzeuges und/oder durch einen Fahrzeugführer erzeugte Signale. Beispiele für von dem Fahrzeug bereitgestellte Signale umfassen Signale, die angeben, ob die Zündung des Fahrzeuges eingeschaltet ist, ob Sicherheitseinrichtungen des Fahrzeuges zum Schutz von Insassen (z.B. Gurtsysteme, Airbags) aktiviert oder deaktiviert sind, ob elektronische/elektrische/mechanische Komponenten des Kraftfahrzeuges (z.B. Motormanagementsysteme, ABS, Systeme zur Stabilitäts- und Traktionskontrolle, Bremskraftverstärker) aktiviert/deaktiviert sind und/oder fehlerfrei arbeiten, sowie Signale von Abstandssensoren, die den Abstand des Kraftfahrzeuges zu anderen Kraftfahrzeugen und Objekten wiedergeben.

Die Steuersignale können auch durch einen Fahrzeugführer sprachgesteuert und/oder durch Betätigung von entsprechenden Eingabeeinrichtungen (z.B. Schalter, Taster) erzeugt werden.

Es ist vorgesehen, bei einem Übergang aus dem Fahrzustand in den Stillstandszustand und umgekehrt oder beim Erreichen des Stillstandszustandes den Antriebsstrang des Kraftfahrzeuges automatisch zu deaktivieren. Somit ist es nicht mehr erforderlich, bei einem Übergang in den Stillstandszustand oder im Stillstandszustand eine Kupplung zum Abkoppeln des Antriebsstranges und/oder ein Getriebe zur Einnahme einer Leerlaufstellung zu betätigen. Weist das Kraftfahrzeug ein Automatikgetriebe auf, so kann dieses so gesteuert werden, dass es bei einem Übergang in den Stillstandszustand oder im Stillstandszustand in eine sogenannte "Neutralstellung" oder "Parkstellung" übergeht. Bei Verwendung eines herkömmlichen durch einen Fahrzeugführer betätigbaren Getriebes können Aktuatoren verwendet werden, die die Kupplung und/oder das Getriebe entsprechend betätigen.

Vorzugsweise wird beim Steuern der Bremsausrüstung eine Betriebsbremseinrichtung und/oder eine Feststellbremseinrichtung und/oder eine Hilfsbremseinrichtung gesteuert.

Folglich ist es möglich, die Feststellbremseinrichtung und/oder die Hilfsbremseinrichtung nach einer festgelegten Zeitdauer nach Erreichen des Stillstandszustandes zu aktivieren, um beispielsweise die zuvor von der Betriebsbremseinrichtung erzeugte Bremskraft bereitzustellen. Entsprechend kann die Feststellbremseinrichtung und/oder die Hilfsbremseinrichtung bei dem Betriebszustand des Kraftfahrzeuges, in dem das Kraftfahrzeug in den Fahrzustand gebracht werden soll, so gesteuert werden, dass die Feststellbremseinrichtung deaktiviert wird, wenn dieser Betriebszustand detektiert wird. Hierbei kann es erforderlich sein, die Betriebsbremseinrichtung so zu steuern, dass sie anfänglich eine Bremskraft bereitstellt, die in dem Stillstandszustand von der Feststellbremseinrichtung erzeugt wurde, wobei bei einem Übergang aus dem Stillstandszustand in den Fahrzustand die Betriebsbremseinrichtung so gesteuert wird, dass ein Übergang in den Fahrzustand möglich wird. Alternativ ist es vorgesehen, dass die Feststellbremseinrichtung für eine weitere festgelegte Zeitdauer aktiviert ist, wenn das Kraftfahrzeug in den Fahrzustand gebracht werden soll. Nach Ablauf der weiteren Zeitdauer werden dann für einen Übergang in den Fahrzustand erforderliche Bremskräfte von der Feststellbremseinrichtung alleine oder in Kombination mit der Betriebsbremseinrichtung und/oder der Hilfsbremseinrichtung erzeugt.

Ergänzend oder alternativ kann die Aktivierung und/oder Deaktivierung der Feststellbremseinrichtung in Abhängigkeit von den Parametern, die den aktuellen Betriebszustand des Kraftfahrzeuges charakterisieren, und/oder den Steuersignalen, die den Übergang in den und/oder aus dem Stillstandszustand angeben, durchgeführt werden.

Diese Parameter und/oder Steuersignale können auch verwendet werden, um wenigstens einen der oben genannten Zeitbereiche für die Feststellbremseinrichtung festzulegen.

Darüber hinaus können diese Parameter und/oder Steuersignale beim Steuern der Bremsausrüstung dazu dienen, deren Komponenten einzeln oder in Kombination zu aktivieren und/oder zu deaktivieren.

### Kurzbeschreibung der Figuren

In der folgenden Beschreibung bevorzugter Ausführungsformen wird auf die beigefügten Figuren Bezug genommen, von denen zeigen:
- Fig. 1: eine schematische Darstellung einer erfindungsgemäßen Vorrichtung zur Steuerung einer Bremsausrüstung eines Kraftfahrzeuges zusammen mit weiteren Komponenten des Kraftfahrzeuges, und
- Fig. 2: eine schematische graphische Darstellung eines "Stop-and-Go"-Betriebes eines Kraftfahrzeuges.

### Beschreibung bevorzugter Ausführungsformen

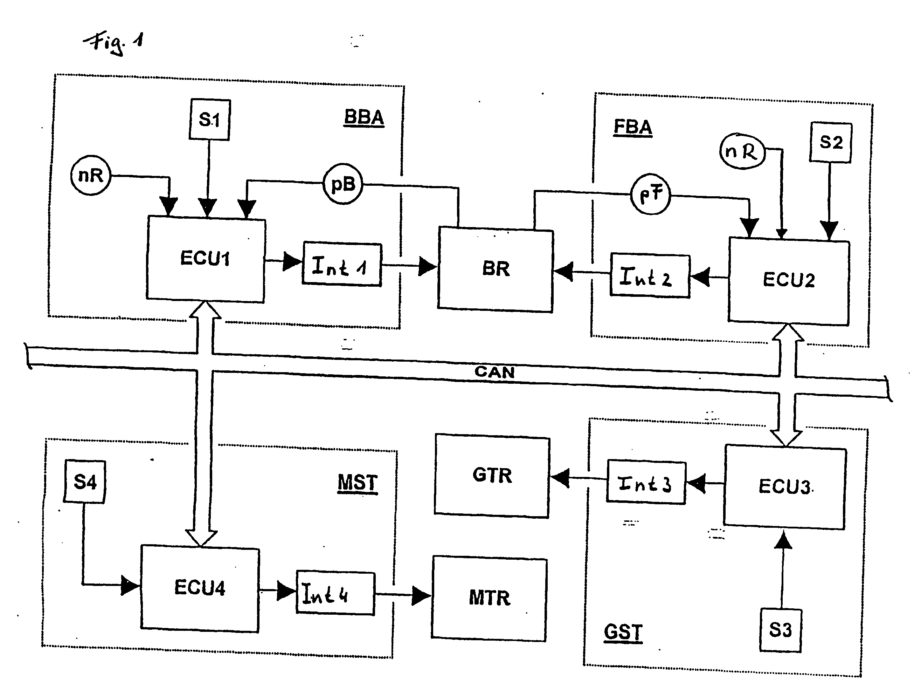

Gemäß Fig. 1 umfasst eine Bremsausrüstung eines nicht gezeigten Kraftfahrzeuges eine steuerbare Betriebsbremsanlage BBA und eine steuerbare Feststellbremsanlage FBA, die gemeinsam oder jeweils einzeln Bremsen BR des Kraftfahrzeuges betätigen. Ferner sind in Fig. 1 als weitere Fahrzeugausrüstungen (Fahrzeugkomponenten) eine Getriebesteuerung GST für ein Getriebe GTR und eine Motorsteuerung MST für einen Motor MTR zu sehen.

Die Betriebsbremsanlage BBA weist eine Steuereinheit ECU1, eine Sensoreinrichtung S1 und Sensoren nR und bP auf. Die Steuereinheit ECU1 dient zur Steuerung der Betriebsbremsanlage BBA unter Verwendung von Signalen der Sensoreinrichtung S1 und der Sensoren nR und pB. Mit der Sensoreinrichtung S1 werden Größen/Parameter erfasst, die einen von einem Fahrzeugführer gewünschten Betrieb der Betriebsbremsanlage angeben. In Abhängigkeit der jeweiligen Anwendung werden mit der Sensoreinrichtung S1 Stellungen und/oder Bewegungen eines Bremspedals (nicht gezeigt), Stellungen eines Bremslichtschalters, Stellungen und/oder Bewegungen eines Gaspedals (nicht gezeigt) und dergleichen erfasst.

Mit dem Sensor nR werden Drehzahlen einzelner oder mehrerer Räder des Kraftfahrzeuges und mit dem Sensor pB die von den Bremsen BR erzeugten Bremskräfte erfasst. Die von der Sensoreinrichtung S1 und den Sensoren nR und pB bereitgestellten Daten werden von der Steuereinheit ECU1 verwendet, um, wie im folgenden beschrieben, über eine mechanische und/oder elektronische Schnittstelle Int1 die Bremsen BR zu steuern.

Die Feststellbremsanlage FBA umfasst eine Steuereinheit ECU2, eine Sensoreinrichtung S2 und Sensoren nR und pF. Mittels der Sensoreinrichtung S2 wird eine von dem Fahrzeugführer gewünschte mittels der Feststellbremsanlage FBA zu erzeugende Bremskraft ermittelt. Hierbei kann die Sensoreinrichtung S2 eine Stellung des Bremspedals, bei der z.B. das Bremspedal vollständig betätigt ist, den Zustand eines Automatikgetriebes für eine Neutral- oder Parkstellung, die Betätigung einer Betätigungseinrichtung für die Feststellbremsanlage FBA (z.B. Handbremshebel, Ein/Aus-Schalter) oder andere unmittelbar durch den Fahrzeugführer, beispielsweise unter Verwendung einer Spracheingabeeinrichtung, eingegebene Signale erfassen, die einen gewünschten Betriebszustand der Feststellbremsanlage FBA charakterisieren. Der Sensor pF erfasst die von den Bremsen BR erzeugte Bremskraft, während der Sensor nR, wie oben beschrieben, Raddrehzahlen erfasst. Unter Verwendung der von der Sensoreinrichtung S2 und den Sensoren pF und nR bereitgestellten Daten steuert die Steuereinheit ECU1 über eine mechanische und/oder elektronische Schnittstelle Int2 die Bremsen BR.

Über ein Bussystem CAN des Kraftfahrzeuges sind die Steuereinheiten ECU1 und ECU2 mit einer Steuereinheit ECU3 der Getriebesteuerung GST und einer Steuereinheit ECU4 der Motorsteuerung MST verbunden. Die Getriebsteuerung GST und die Motorsteuerung MST umfassen Sensoren S3 bzw. S4, mit denen Größen/Parameter erfasst werden können, die neben den von den Steuereinheiten ECU1 und ECU2 bereitgestellten Daten zum Betrieb der Getriebesteuer von GST bzw. der Motorsteuerung MST verwendet werden.

Zur Steuerung des Getriebes GTR und des Motors MTR sind die Getriebesteuerung GST und die Motorsteuerung MST über Schnittstellen Int3 bzw. Int4 mit dem Getriebe GTR bzw. dem Motor MTR verbunden.

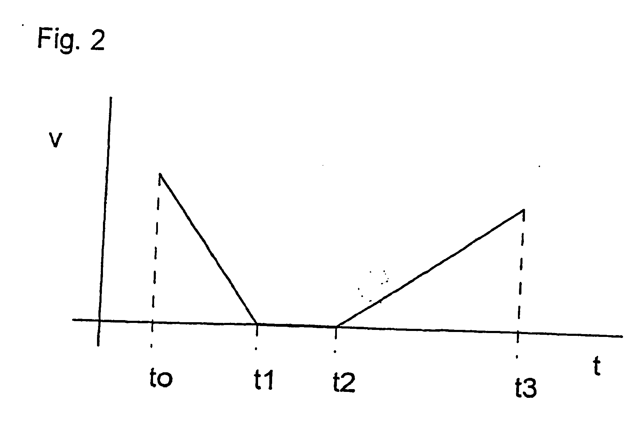

Der Betrieb der in Fig. 1 dargestellten Anordnung wird unter Bezugnahme auf den in Fig. 2 dargestellten Geschwindigkeitsverlauf des Kraftfahrzeuges während eines "Stop-and-Go"-Betriebes erläutert.

Gemäß Fig. 2 beginnt zu einem Zeitpunkt t₀ eine Abbremsphase für das Kraftfahrzeug, die zu einem Zeitpunkt t₁ endet. Danach befindet sich das Kraftfahrzeug im Stillstand. Zu einem Zeitpunkt t₂, an dem die Stillstandsphase endet, beginnt eine Anfahrphase für das Kraftfahrzeug, die zu einem Zeitpunkt t₃ endet und in eine nicht dargestellte Fahrphase übergeht.

Unter Verwendung der von der Sensoreinrichtung S1 und den Sensoren nR und pB bereitgestellten Daten wird der Zeitpunkt t₀ und damit der Beginn der Abbremsphase ermittelt. Während der Abbremsphase, d.h. im Zeitbereich zwischen t₀ und t₁, wird die Betriebsbremsanlage BBA so gesteuert, dass sie den Fahrzeugführer unterstützt, das Kraftfahrzeug abzubremsen und in den Stillstand zu bringen. Beim Erreichen des Stillstandszustandes zu dem Zeitpunkt t₁ werden die Bremsen BR von der Feststellbremsanlage gesteuert. Hierbei ist es vorgesehen, dass die Steuerung der Bremsen BR zu dem Zeitpunkt t₁, kontinuierlich oder abgestuft während einer sich unmittelbar an den Zeitpunkt t₁ anschließenden Zeitperiode von der Betriebsbremsanlage BBA zu der Feststellbremsanlage FBA übergeht.

Werden zur Steuerung der Feststellbremsanlage FBA mittels der Sensoreinrichtung S2 Größen/Parameter erfasst, die unmittelbar durch den Fahrzeugführer eingegeben werden und einen gewünschten Betriebszustand für die Feststellbremsanlage FBA angeben, findet der Übergang der Steuerung der Bremsen BR zu der Feststellbremsanlage FBA zu Zeitpunkten oder während Zeitperioden statt, die in Abhängigkeit von Signalen der Sensoreinrichtung S2 ermittelt und/oder vorgegeben werden.

Wenn zu dem Zeitpunkt t₂ den Stillstandszustand verlassen soll, d.h. die Anfahrphase beginnt, wird die Feststellbremsanlage FBA deaktiviert und die Betriebsbremsanlage BBA steuert die Bremsen BR zur Erzeugung von Bremskräften. In der Anfahrphase wird die Betriebsbremsanlage BBA so gesteuert, dass eine von dem Fahrzeugführer gewünschte Anfahrphase erreicht wird. Hierbei sollten Stellungen und/oder Bewegungen des Gaspedals mittels der Sensoreinrichtung S1 ermittelt werden, um in Abhängigkeit davon die Bremsen BR zu steuern, d.h. die für den Stillstandszustand erzeugten Bremskräfte abzubauen.

In der Abbremsphase, d.h. während der gesamten Abbremsphase oder während einzelner oder mehrerer darin enthaltener Zeitperioden, wird die Getriebesteuerung GST unter Verwendung von Daten der Steuereinheit ECU1 und der Sensoreinrichtung S3 gesteuert, um das Getriebe GTR zur Unterstützung des Bremsbetriebes zu betreiben. Die Sensoreinrichtung S3 erfasst den aktuellen Betriebszustand des Getriebes GTR, genauer den aktuell eingelegten Gang. In Abhängigkeit des jeweiligen Betriebszustandes der Betriebsbremsanlage BBA und des Getriebes GTR werden bei Verwendung eines halbautomatischen oder eines automatischen Getriebes für das Getriebe GTR durch Steuerung der Steuereinheit ECU3 höhere Übersetzungen gewählt, um das Kraftfahrzeug aufgrund der daraus resultierenden höheren Motorbremskraft zusätzlich abzubremsen. Bei einem herkömmlichen nicht automatischen Getriebe, das unmittelbar durch den Fahrzeugführer betätigt wird, können im Sichtfeld des Fahrzeugführers angeordnete optische Anzeigeelemente verwendet werden, um den Fahrzeugführer anzuweisen, höhere Übersetzungen zu wählen (herunterzuschalten).

Während oder in der Abbremsphase unterstützt die Motorsteuerung MST ein Abbremsen des Kraftfahrzeuges, indem in Abhängigkeit der Daten der Steuereinheit ECU1 und der Sensoreinrichtung S4 der Motor MTR gesteuert wird. Mittels der Sensoreinrichtung S4 wird eine dem Motor MTR aktuell zugeführte Luft-Treibstoff-Mischung ermittelt. Das erfasste Luft-Treibstoff-Verhältnis wird dann unter Berücksichtigung des entsprechenden Betriebszustandes der Betriebsbremsanlage BBA so verändert, dass der Motor MTR ein geringeres Drehmoment liefert.

In der Stillstandsphase, d.h. während der gesamten Stillstandsphase oder für einzelne oder mehrere Zeitbereiche derselben, wird das Getriebe GTR in einen Leerlaufzustand gebracht und/oder die Treibstoffzufuhr zu dem Motor MTR unterbrochen.

Um das Beschleunigen des Kraftfahrzeuges in der Anfahrphase zu unterstützen, wird, vergleichbar zu der Abbremsphase, während oder in der Anfahrphase das Getriebe GTR und/oder der Motor MTR entsprechend gesteuert. Im Gegensatz zu der Abbremsphase werden zur Unterstützung der Anfahrphase ausgehend von dem größten verfügbaren Übersetzungsverhältnis des Getriebes GTR niedrigerere Übersetzungsverhältnisse gewählt, während für den Motor MTR Luft-Treibstoff-Gemische bereitgestellt werden, die für in der Anfahrphase benötigte Motordrehmomente erforderlich sind.

## Patentansprüche

1. Verfahren zum Steuern einer Bremsausrüstung während eines Stop-und-Go-Betriebes eines Kraftfahrzeuges, mit folgenden Schritten:
- Ermitteln eines Betriebszustandes eines Kraftfahrzeuges, in dem das Kraftfahrzeug aus einem Fahrzustand in einen Stillstandszustand gebracht werden soll,
- Steuern einer Bremsausrüstung (BBA, FBA) des Kraftfahrzeuges, so dass unabhängig von einer Betätigung der Bremsausrüstung (BBA, FBA) durch einen Fahrzeugführer Bremskräfte aufgebaut werden, die geeignet sind, das Kraftfahrzeug nach Erreichen des Stillstandszustandes in diesem zu halten,
- automatisches Deaktivieren eines Motors (MTR) des Kraftfahrzeuges im Stillstandszustand,
- Ermitteln eines Betriebszustandes des Kraftfahrzeuges, in dem das Kraftfahrzeug aus dem Stillstandszustand in den Fahrzustand gebracht werden soll, und
- Steuern der Bremsausrüstung (BBA, FBA) des Kraftfahrzeuges, so dass die im Stillstandszustand von der Bremsausrüstung (BBA, FBA) erzeugten Bremskräfte unabhängig von einer Betätigung der Bremsausrüstung (BBA, FBA) durch den Fahrzeugführer in einer Weise abgebaut werden, die einen Übergang in den Fahrzustand zulässt,
wobei
- bei einem Übergang aus dem Fahrzustand in den Stillstandszustand der Motor (MTR) des Kraftfahrzeuges so gesteuert wird, dass Kräfte und/oder Momente erzeugt werden, die zusätzlich zu den von der Bremsausrüstung (BBA, FBA) erzeugten Bremskräften das Kraftfahrzeug abbremsen und bei einem Übergang aus dem Stillstandszustand in den Fahrzustand zum Unterstützen des Beschleunigens des Kraftfahrzeuges der Motor (MTR) des Kraftfahrzeuges entsprechend gesteuert wird,
- im Übergang aus dem Fahrzustand in den Stillstandszustand die Motorsteuerung (MST) ein Abbremsen des Kraftfahrzeuges unterstützt, indem in Abhängigkeit der Daten der Steuereinheit (ECU1) und einer Sensoreinrichtung (S4) der Motor (MTR) des Kraftfahrzeuges gesteuert wird,
bei dem mittels der Sensoreinrichtung (S4) eine dem Motor (MTR) aktuell zugeführte Luft-Treibstoff-Mischung ermittelt wird, wobei ein erfasstes Luft-Treibstoff-Verhältnis dann unter Berücksichtigung des entsprechenden Betriebszustandes der Betriebsbremseinrichtung (BBA) so verändert wird, dass der Motor (MTR) ein geringeres Drehmoment liefert,
bei dem in der Stillstandsphase die Treibstoffzufuhr zu dem Motor (MTR) unterbrochen wird, und
bei dem zum Unterstützen des Beschleunigens des Kraftfahrzeuges in der Anfahrphase in der Anfahrphase der Motor MTR gesteuert wird, indem für den Motor (MTR) Luft-Treibstoff-Gemische bereitgestellt werden, die für in der Anfahrphase benötigte Motordrehmomente erforderlich sind.

2. Verfahren gemäß Anspruch 1, bei dem
- die Bremsausrüstung (BBA, FBA) abhängig oder unabhängig von einer Betätigung der Bremsausrüstung (BBA, FBA) durch den Fahrzeugführer so gesteuert wird, dass Bremskräfte aufgebaut werden, die geeignet sind, das Kraftfahrzeug in den Stillstandszustand zu bringen.

3. Verfahren gemäß Anspruch 1, bei dem
- beim Abbau der Bremskräfte der Betriebszustand des Kraftfahrzeuges in Abhängigkeit der wirkenden Bremskräfte gesteuert wird.

4. Verfahren gemäß Anspruch 3, bei dem
- beim Steuern des Betriebszustandes des Kraftfahrzeuges dessen Motordrehzahl und/oder Motordrehmoment gesteuert wird.

5. Verfahren gemäß einem der vorhergehenden Ansprüche, bei dem
- zum Ermitteln des Betriebszustandes des Kraftfahrzeuges Parameter, die den aktuellen Betriebszustand des Fahrzeuges charakterisieren, und/oder Steuersignale verwendet werden, die einen Übergang in den und/oder aus dem Stillstandszustand angeben.

6. Verfahren gemäß einem der vorhergehenden Ansprüche, bei dem
- zum Steuern der Bremsausrüstung(BBA, FBA) Größen ermittelt werden, die einen aktuellen Betriebszustand der Bremsausrüstung (BBA, FBA) angeben.

7. Verfahren gemäß Anspruch 6, bei dem die Betriebszustandsgrößen der Bremsausrüstung (BBA, FBA) für eine Betriebsbremseinrichtung (BBA) und/oder eine Feststellbremseinrichtung (FBA) und/oder eine Hilfsbremseinrichtung ermittelt werden.

8. Verfahren gemäß einem der vorhergehenden Ansprüche, bei dem
- beim Steuern der Bremsausrüstung (BBA, FBA) eine Betriebsbremseinrichtung (BBA) und/oder eine Feststellbremseinrichtung (FBA) und/oder eine Hilfsbremseinrichtung gesteuert werden.

9. Verfahren gemäß Anspruch 8, bei dem
- die Feststellbremseinrichtung (FBA) und/oder die Hilfsbremseinrichtung nach einer vorgegebenen Zeitdauer nach Erreichen des Stillstandszustandes aktiviert werden.

10. Verfahren gemäß Anspruch 8 oder 9, bei dem
- die Feststellbremseinrichtung (FBA) und/oder die Hilfsbremseinrichtung bei dem Betriebszustand, in dem Kraftfahrzeug aus dem Stillstandszustand in den Fahrzustand gebracht werden soll, deaktiviert werden.

11. Vorrichtung zur Steuerung einer Bremsausrüstung während eines Stop-und-Go-Betriebes eines Kraftfahrzeuges, mit:
- Erfassungseinrichtungen (S1, S2, nR, pB, pF)
- zum Ermitteln eines Betriebszustandes eines Kraftfahrzeuges, in dem das Kraftfahrzeug aus einem Fahrzustand in einen Stillstandszustand gebracht werden soll und
- zum Ermitteln eines Betriebszustandes eines Kraftfahrzeuges, in dem das Kraftfahrzeug aus dem Stillstandszustand in den Fahrzustand gebracht werden soll, und
- Steuereinheiten (ECU1, ECU2) zur Steuerung einer Bremsausrüstung (BBA, FBA) des Kraftfahrzeuges die dazu eingerichtet sind,
- unabhängig von einer Betätigung der Bremsausrüstung (BBA, FBA) durch einen Fahrzeugführer Bremskräfte aufzubauen, die geeignet sind, das Kraftfahrzeug nach Erreichen des Stillstandszustandes in diesem zu halten und
- im Stillstandszustand erzeugte Bremskräfte unabhängig von einer Betätigung der Bremsausrüstung (BBA, FBA) durch den Fahrzeugführer so abzubauen, dass ein Übergang in den Fahrzustand zugelassen wird, sowie
- einer Einrichtung (S3, S4, ECU1, ECU3, ECU4) zum automatischen Deaktivieren eines Motors (MTR) des Kraftfahrzeugs im Stillstand, und
zum Steuern des Motors (MTR) des Kraftfahrzeuges bei einem Übergang aus dem Fahrzustand in den Stillstandszustand so, dass Kräfte und/oder Momente erzeugt werden, die zusätzlich zu den von der Bremsausrüstung (BBA, FBA) erzeugten Bremskräften das Kraftfahrzeug abbremsen und
zum Steuern des Motors (MTR) des Kraftfahrzeuges bei einem Übergang aus dem Still-standszustand in den Fahrzustand zum Unterstützen des Beschleunigens des Kraftfahrzeuges,
bei der die Steuereinheiten (ECU1, ECU2) bei einem Übergang aus dem Fahrzustand in den Stillstaniszustand die Motorsteuerung (MST) ein Abbremsen des Kraftfahr- zeuges unterstützten, indem in Abhängigkeit der Daten der Steuereinheit (ECU1) und einer Sensoreinrichtung (S4) der Motor (MTR) gesteuert wird,
bei der mittels der Sensoreinrichtung (54) eine dem Motor MTR aktuell zugeführte Luft-Treibstoff-Mischung ermittelt wird, wobei ein erfasstes Luft-Treibstoff-Verhältnis dann unter Berücksichtigung des entsprechenden Betriebszustandes der Betriebsbremseinrichtung (BBA) so verändert wird, dass der Motor (MTR) ein geringeres Drehmoment liefert,
bei der in einer Stillstandsphase die Treibstoffzufuhr zu dem Motor (MTR) unterbrochen wird, und
bei der zum Unterstützen des Beschleunigens des Kraftfahrzeuges in der Anfahrphase der Motor (MTR) gesteuert wird, indem für den Motor (MTR) Luft-Treibstoff-Gemische bereitgestellt werden, die für in der Anfahrphase benötigte Motordrehmomente erforderlich sind.

12. Vorrichtung gemäß Anspruch 11, bei der
- die Steuereinheiten (ECU1, ECU2) die Bremsausrüstung (BBA, FBA) so steuern, dass abhängig oder unabhängig von einer Betätigung der Bremsausrüstung (BBA, FBA) durch den Fahrzeugführer Bremskräfte aufgebaut werden, die geeignet sind, das Kraftfahrzeug in den Stillstand zu bringen.

13. Vorrichtung gemäß einem der Ansprüche 11 oder 12, bei der die Deaktivierungseinrichtung umfasst:
- eine Erfassungseinrichtung (S3) zur Erfassung eines Betriebszustandes eines Getriebes (GTR) des Kraftfahrzeuges, und
- eine Steuereinheit (ECU3) für das Getriebe (GTR).

14. Vorrichtung gemäß einem der Ansprüche 11 bis 13, bei der die Deaktivierungseinrichtung umfasst:
- eine Erfassungseinrichtung (S4) zur Erfassung eines Betriebszustandes eines Motors (MTR) des Kraftfahrzeuges, und
- eine Steuereinheit (ECU4) zur Steuerung des Motors (MTR).

15. Vorrichtung gemäß einem der Ansprüche 11 bis 14, bei der
- die Erfassungseinrichtungen (S1, S2, nR, pB, pF) ausgelegt sind, Parameter, die den aktuellen Betriebszustand des Fahrzeuges charakterisieren, und/oder Steuersignale zu erfassen, die einen Übergang in den und/oder aus dem Stillstandszustand angeben.

16. Vorrichtung gemäß einem der Ansprüche 11 bis 15, bei der
- die Steuereinheiten (ECU1, ECU2) eine Steuereinheit (ECU1) für eine Betriebsbremseinrichtung (BBA) und/oder eine Steuereinheit (ECU2) für eine Feststellbremseinrichtung (FBA) und/oder eine Steuereinheit für eine Hilfsbremseinrichtung umfassen.

17. Computerprogrammprodukt, mit:
- Programmcodeteilen zur Ausführung der Schritte gemäß einem der Ansprüche 1 bis 10.

18. Computerprogrammprodukt gemäß Anspruch 17,
gespeichert auf einem computerlesbaren Aufzeichnungsmedium oder in einer computerlesbaren Aufzeichnungsvorrichtung.

## Claims

1. Method for controlling braking equipment during a stop-and-go operation of a motor vehicle, comprising the following steps:
- determining an operating state of a motor vehicle, in which the motor vehicle is to be brought from a traveling state into a state of standstill,
- controlling braking equipment (BBA, FBA) of the motor vehicle so that, independently of any actuation of the braking equipment (BBA, FBA) by a vehicle driver, braking forces are built up, which are capable of holding the motor vehicle in the state of standstill having reached the same,
- automatically de-activating an engine (MTR) of the motor vehicle in the state of standstill,
- determining an operating state of the motor vehicle, in which the motor vehicle is to be brought from the state of standstill into the traveling state, and
- controlling the braking equipment (BBA, FBA) of the motor vehicle so that the braking forces, which are produced in the state of standstill by the braking equipment (BBA, FBA), can be reduced independently of any actuation of the braking equipment (BBA, FBA) by the vehicle driver in such a way as to allow a transition into the traveling state,
wherein
- the engine (MTR) of the motor vehicle is controlled, when there is a transition from the traveling state into the state of standstill, such that forces and/or moments are produced, which, in addition to the braking forces produced by the braking equipment (BBA, FBA), brake the motor vehicle and, when there is a transition from the state of standstill into the traveling state, the engine (MTR) of the motor vehicle is controlled accordingly to assist acceleration of the motor vehicle,
- in the transition from the traveling state into the state of standstill, the engine control (MST) assists braking the motor vehicle during a braking phase by controlling the engine (MTR) of the motor vehicle in dependence of the data from a control unit (ECU1) and a sensor means (S4),
- an air-fuel mixture, which is actually supplied to the engine (MTR), is determined by means of the sensor means (S4), wherein a detected air-fuel ratio is then varied with regard to the corresponding operation state of a service braking means (BBA) such that the engine (MTR) delivers a lower torque,
- the fuel supply to the engine (MTR) is interrupted in the state of standstill, and
- in order to assist acceleration of the motor vehicle during the starting phase, the engine (MTR) is controlled by providing air-fuel mixtures, which are necessary for needed engine torques during the starting phase, for the engine (MTR).

2. Method according to Claim 1, wherein
the braking equipment (BBA, FBA) is controlled in dependence or independently of any actuation of the braking equipment (BBA, FBA) by the vehicle driver such that braking forces are built up which are capable of bringing the motor vehicle into the state of standstill.

3. Method according to claim 1, wherein
the operating state of the motor vehicle is controlled in dependence of acting braking forces when reducing the braking forces.

4. Method according to claim 3, wherein
when controlling the operating state of the motor vehicle its engine speed and/or engine torque is controlled.

5. Method according to any one of the preceding Claims, wherein
parameters, which characterize the current operating state of the vehicle, and/or control signals, which indicate a transition into and/or from the state of standstill, are used to determine the operating state of the motor vehicle.

6. Method according to any one of the preceding Claims, wherein
quantities, which indicate a current operating state of the braking equipment (BBA, FBA), are determined to control the braking equipment (BBA, FBA).

7. Method according to Claim 6, wherein
the operating state quantities of the braking equipment (BBA, FBA) are determined for a service braking means (BBA) and/or a holding braking means (FBA) and/or an auxiliary braking means.

8. Method according to any one of the preceding Claims, wherein
a service braking means (BBA) and/or a holding braking means (FBA) and/or an auxiliary braking means is/are controlled when controlling the braking equipment (BBA, FBA).

9. Method according to Claim 8, wherein
- the holding mechanism (FBA) and/or the auxiliary braking means is/are activated after a
predetermined period after reaching the state of standstill.

10. Method according to Claim 8 or 9, wherein
the holding braking means (FBA) and/or the auxiliary braking means are de-activated in the operating state, in which the vehicle is to be brought from the state of standstill into the traveling state.

11. Device for controlling braking equipment during a stop-and-go operation of a motor vehicle, comprising:
- detection means (S1, S2, nR, pB, pF)
- for determining an operating state of a motor vehicle, in which the motor vehicle is to be brought from a traveling state into a state of standstill and
- for determining an operating state of a motor vehicle, in which the motor vehicle is to be brought from the state of standstill into the traveling state, and
- control units (ECU1, ECU2) for controlling braking equipment (BBA, FBA) of the motor vehicle adapted to
- build up, independently of any actuation of the braking equipment (BBA, FBA) by a vehicle driver, braking forces, which are capable of holding the motor vehicle in the state of standstill having reached this same and
- reduce braking forces, which are produced in the state of standstill, independently of any actuation of the braking equipment (BBA, FBA) by the vehicle driver in such a way as to allow a transition into the traveling state, and
- a means (S3, S4, ECU1, ECU3, ECU4)
- for automatically de-activating an engine (MTR) of the motor vehicle in the state of standstill, and
- for controlling the engine (MTR) of the motor vehicle, when there is a transition from the traveling state into the state of standstill, such that forces and/or moments are produced, which, in addition to the braking forces produced by the braking equipment (BBA, FBA), brake the motor vehicle and
- for controlling the engine (MTR) of the motor vehicle to assist acceleration of the motor vehicle, when there is a transition from the state of standstill into the traveling state,
wherein
- the engine control (MST) assists braking the motor vehicle during a braking phase by controlling the engine (MTR) of the motor vehicle in dependence of the data from a control unit (ECU1) and a sensor means (S4), when there is a transition from the traveling state into the state of standstill,
- an air-fuel mixture, which is actually supplied to the engine (MTR), is determined by means of the sensor means (S4), wherein a detected air-fuel ratio is then varied with regard to the corresponding operation state of a service braking means (BBA) such that the engine (MTR) delivers a lower torque,
- the fuel supply to the engine (MTR) is interrupted in the state of standstill, and
- in order to assist acceleration of the motor vehicle during the starting phase, the engine (MTR) is controlled by providing air-fuel mixtures, which are necessary for needed engine torques during the starting phase, for the engine (MTR).

12. Device according to Claim 11, in which
- the control units (ECU1, ECU2) control the braking equipment (BBA, FBA) such that, in dependence or independently of any actuation of the braking equipment (BBA, FBA) by the vehicle driver, braking forces are built up, which are capable of bringing the motor vehicle to a standstill.

13. Device according to any one of Claims 11 or 12, in which the de-activation means comprises:
- a detection means (S3) for detecting an operating state of a transmission (GTR) of the motor vehicle, and
- a control unit (ECU3) for the transmission (GTR).

14. Device according to any one of Claims 11 to 13, in which the de-activation means comprises:
- a detection means (S4) for detecting an operating state of an engine (MTR) of the motor vehicle, and
- a control unit (ECU4) for controlling the engine (MTR).

15. Device according to any one of Claims 11 to 14, in which
the detection means (S1, S2, nR, pB, pF) are adapted to detect parameters, which characterize the current operating state of the motor vehicle, and/or control signals, which indicate a transition into and/or from the state of standstill.

16. Device according to any one of Claims 11 to 15, in which
the control units (ECU1, ECU2) comprise a control unit (ECU1) for a service braking means (BBA) and/or a control unit (ECU2) for a holding braking means (FBA) and/or a control unit for an auxiliary braking means.

17. Computer program product, comprising:
- program code portions for carrying out the steps according to one of the claims 1 to 10.

18. Computer program product according to claim 17,
stored on a computer readable recording medium or in a computer readable storage device.

## Revendications

1. Procédé pour commander une installation de freinage d'automobile en mode de fonctionnement « marche-arrêt », comprenant les étapes suivantes :
- la détermination d'un état de fonctionnement d'un véhicule, dans le cadre duquel le véhicule doit être amené d'un état de marche dans un état d'immobilisation,
- la commande d'une installation de freinage (BBA, FBA) du véhicule de sorte à produire, indépendamment de l'actionnement de l'installation de freinage (BBA, FBA) par le conducteur, des forces de freinage propres à maintenir le véhicule en état d'immobilisation une fois le véhicule arrêté,
- la désactivation automatique d'un moteur (MTR) du véhicule se trouvant à l'arrêt,
- la détermination d'un état de fonctionnement du véhicule, dans le cadre duquel le véhicule doit être amené d'un état d'immobilisation dans un état de marche, et
- la commande de l'installation de freinage (BBA, FBA) du véhicule de sorte à supprimer, indépendamment de l'actionnement de l'installation de freinage (BBA, FBA) par le conducteur, les forces de freinage produites pendant l'état d'immobilisation de sorte à autoriser un passage à l'état de marche,
- le moteur (MTR) du véhicule étant, lors d'un passage de l'état de marche à l'état d'immobilisation, commandé de sorte à produire des forces et/ou des couples qui, en plus des forces de freinage produites par l'installation de freinage (BBA, FBA), freinent le véhicule et, lors d'un passage de l'état d'immobilisation à l'état de marche, commandent en conséquence le moteur (MTR) du véhicule pour assister son accélération,
- la commande moteur (MST), lors d'un passage de l'état de marche à l'état d'immobilisation, assistant un freinage du véhicule en commandant le moteur (MTR) en fonction des données de l'unité de commande (ECU1) et d'un dispositif de détection (S4),
- un mélange d'air et de carburant en cours d'acheminement vers le moteur MTR étant déterminé à l'aide du dispositif de détection (S4), un rapport air/carburant détecté étant ensuite modifié selon l'état de fonctionnement correspondant de l'installation de freinage (BBA) de sorte que le moteur (MTR) fournit un couple-moteur réduit,
- l'alimentation du moteur (MTR) en carburant étant interrompue pendant la phase d'immobilisation, et
- le moteur MTR, pour assister l'accélération du véhicule pendant la phase de démarrage, étant commandé par la mise à disposition pour le moteur (MTR) des mélanges d'air et de carburant qui sont nécessaires à l'obtention des couples-moteurs requis pendant la phase de démarrage.

2. Procédé selon la revendication 1, dans le cadre duquel
- l'installation de freinage (BBA, FBA) est commandée en fonction ou indépendamment d'un actionnement de l'installation de freinage (BBA, FBA) par le conducteur de sorte à produire des forces de freinage propres à amener le véhicule dans un état d'immobilisation.

3. Procédé selon la revendication 1, dans le cadre duquel
- lors de la suppression des forces de freinage, l'état de fonctionnement du véhicule est commandé en fonction des forces de freinage en jeu.

4. Procédé selon la revendication 3, dans le cadre duquel
le régime du moteur et/ou le couple moteur du véhicule sont commandés pendant qu'est commandé l'état de fonctionnement du véhicule.

5. Procédé selon l'une des revendications précédentes, dans le cadre duquel
- des paramètres, qui caractérisent l'état de fonctionnement actuel du véhicule, et/ou des signaux de commande, qui indiquent un passage à l'état d'immobilisation et/ou un passage depuis l'état d'immobilisation, sont utilisés pour déterminer l'état de fonctionnement du véhicule.

6. Procédé selon l'une des revendications précédentes, dans le cadre duquel
- des grandeurs, qui indiquent un état de fonctionnement actuel de l'installation de freinage (BBA, FBA), sont déterminées pour commander l'installation de freinage (BBA, FBA).

7. Procédé selon la revendication 6, dans le cadre duquel
les grandeurs relatives à l'état de fonctionnement de l'installation de freinage (BBA, FBA) sont déterminées pour un dispositif de frein de service (BBA) et/ou un dispositif de frein de stationnement (FBA) et/ou un dispositif de freinage auxiliaire.

8. Procédé selon l'une des revendications précédentes, dans le cadre duquel
- un dispositif de frein de service (BBA) et/ou un dispositif de frein de stationnement (FBA) et/ou un dispositif de freinage auxiliaire sont commandés lorsqu'est commandée l'installation de freinage (BBA, FBA).

9. Procédé selon la revendication 8, dans le cadre duquel
- le frein de stationnement (FBA) et/ou le dispositif de freinage auxiliaire sont activés après une durée prédéterminée une fois atteint l'état d'immobilisation.

10. Procédé selon la revendication 8 ou 9, dans le cadre duquel
- le dispositif de frein de stationnement (FBA) et/ou le dispositif de freinage auxiliaire sont désactivés à l'état de fonctionnement dans lequel le véhicule doit être amené de l'état d'immobilisation dans l'état de marche.

11. Dispositif pour commander une installation de freinage d'automobile en mode de fonctionnement « marche-arrêt », comprenant :
- des dispositifs de détection (S1, S2, nR, pB, pF)
- servant à détecter un état de fonctionnement d'un véhicule dans lequel le véhicule doit être amené d'un état de marche dans un état d'immobilisation, et
- servant à détecter un état de fonctionnement d'un véhicule dans lequel le véhicule doit être amené d'un état d'immobilisation dans un état de marche, et
- des unités de commande (ECU1, ECU2) servant à commander une installation de freinage (BBA, FBA) d'automobile et conçues,
- pour produire, indépendamment de l'actionnement de l'installation de freinage (BBA, FBA) par le conducteur, des forces de freinage propres à maintenir le véhicule en état d'immobilisation une fois le véhicule arrêté, et
- pour supprimer, indépendamment de l'actionnement de l'installation de freinage (BBA, FBA) par le conducteur, des forces de freinage produites à l'état d'immobilisation de sorte à autoriser un passage à l'état de marche, ainsi que
- un dispositif (S3, S4, ECU3, ECU4) servant à désactiver automatiquement un moteur (MTR) du véhicule à l'arrêt et
à commander le moteur (MTR) du véhicule lors d'un passage de l'état de marche à l'état d'immobilisation de sorte à produire des forces et/ou des couples qui, en plus des forces de freinage produites par l'installation de freinage (BBA, FBA), freinent le véhicule et
à commander le moteur (MTR) lors d'un passage de l'état d'immobilisation à l'état de marche pour assister l'accélération du véhicule,
dans le cadre duquel les unités de commande (ECU1, ECU2) assistent un freinage du véhicule lors d'un passage de l'état de marche à l'état d'immobilisation en commandant le moteur (MTR) en fonction des données de l'unité de commande (ECU1) et d'un dispositif de détection (S4),
dans le cadre duquel un mélange d'air et de carburant acheminé momentanément vers le moteur MTR est déterminé à l'aide du dispositif de détection (S4), un rapport air/carburant détecté étant ensuite modifié selon l'état de fonctionnement correspondant de l'installation de freinage (BBA) de sorte que le moteur (MTR) fournit un couple-moteur réduit,
dans le cadre duquel l'alimentation du moteur (MTR) en carburant est interrompue pendant la phase d'immobilisation, et
dans le cadre duquel, pour assister l'accélération du véhicule pendant la phase de démarrage, le moteur MTR est commandé par la mise à disposition pour le moteur (MTR) de mélanges d'air et de carburant qui sont nécessaires à l'obtention des couples-moteurs requis pendant la phase de démarrage.

12. Dispositif selon la revendication 11, dans le cadre duquel
- les unités de commande (ECU1, ECU2) commandent l'installation de freinage (BBA, FBA) de sorte à produire, en fonction ou indépendamment d'un actionnement de l'installation de freinage (BBA, FBA) par le conducteur, des forces de freinage propres à faire s'immobiliser le véhicule.

13. Dispositif selon l'une des revendications 11 à 12, dans le cadre duquel le dispositif de désactivation comprend :
- un dispositif de détection (S3) servant à détecter un état de fonctionnement d'une boîte de vitesses (GTR) du véhicule, et
- une unité de commande (ECU3) pour la boîte de vitesses (GTR).

14. Dispositif selon l'une des revendications 11 à 13, dans le cadre duquel le dispositif de désactivation comprend :
- un dispositif de détection (S4) servant à détecter un état de fonctionnement d'un moteur (MTR) du véhicule, et
- une unité de commande (ECU4) pour le moteur (MTR).

15. Dispositif selon l'une des revendications 11 à 14, dans le cadre duquel
- les dispositifs de détection (S1, S2, nR, pB, pF) sont conçus pour détecter des paramètres caractérisant l'état de fonctionnement actuel du véhicule et/ou des signaux de commande indiquant un passage à l'état d'immobilisation et/ou un passage depuis l'état d'immobilisation.

16. Dispositif selon l'une des revendications 11 à 15, dans le cadre duquel
- les unités de commande (ECU1, ECU2) comprennent une unité de commande (ECU1) pour un dispositif de frein de service (BBA) et/ou une unité de commande (ECU2) pour un dispositif de frein de stationnement (FBA) et/ou une unité de commande pour un dispositif de freinage auxiliaire.

17. Produit de programme d'ordinateur, comprenant
- des parties de code de programme pour la réalisation des étapes selon l'une des revendications 1 à 10.

18. Produit de programme d'ordinateur selon la revendication 17,
enregistré sur un support d'enregistrement lisible par ordinateur ou dans un dispositif d'enregistrement lisible par ordinateur.
